# NEW EUROPEAN PATENT SPECIFICATION

(11) **EP 1 776 851 B2**
(45) Date of publication and mention of the opposition decision: **17.09.2014**
(45) Mention of the grant of the patent: 20.07.2011
(21) Application number: 06021740.3
(22) Date of filing: 18.10.2006
(51) Int. Cl.: A01B 69/00

(54) **Arrangement to control automatically the working width of a plough**
Vorrichtung zur automatischen Regelung der Arbeitsbreite eines Pflugs
Système pour le réglage automatique de la largeur de travail d'une charrue

(30) Priority: 18.10.2005 NL 1030219
(43) Date of publication of application: 25.04.2007
(73) Proprietor: KUHN S.A., 67700 Saverne (FR)
(72) Inventor: Klompe, Aad, 3261LJ Oud Beijerland (NL); Lerink, Peter, 3271 AJ Mijnsheerenland (NL)
(74) Representative: Nuss, Laurent

(56) References cited:
- EP-A1- 1 444 879
- EP-A2- 1 338 186
- WO-A-02/080652
- DE-A1- 10 039 600
- DE-A1- 19 961 442
- DE-C1- 3 345 231
- US-A- 3 537 531
- US-A1- 2003 208 311

## Description

The present invention relates to an arrangement to automatically control the working width of a plough. This arrangement comprises a gps-antenna which is part of a global positioning system. The gps-antenna serves to receive signals from one or more gps-satellites. Based on these signals a micro processor calculates the instantaneous position of the gps-antenna and compares this "ist" position with a pre-determined "soll" position. If the "ist"position does not comply with the "soll" position, the micro processor may command one or more actuators controlling the working width of the plough.

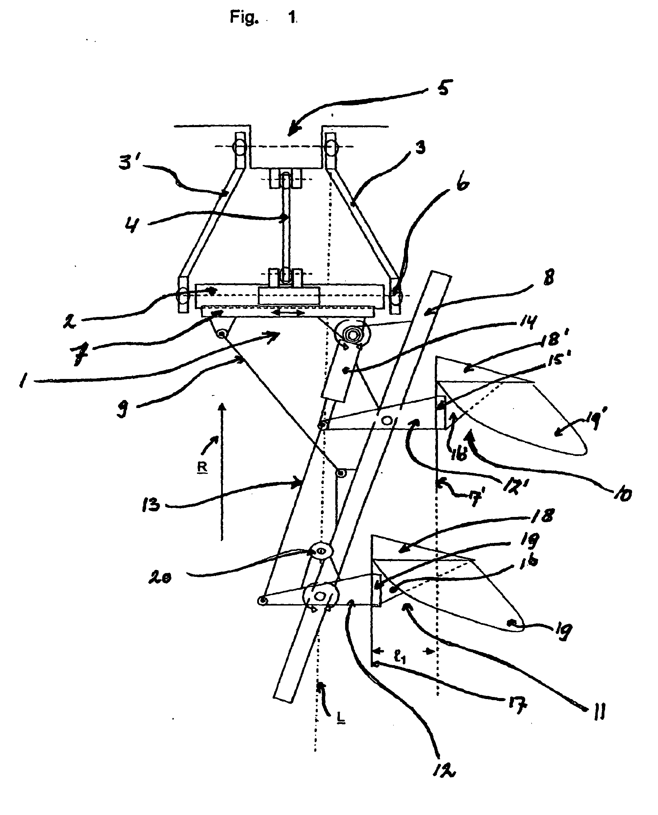

Arrangements of the above type are known from example from US 2003/208311 A1 and EP 1338186 A2. In US 2003/208311 A1 the position of the gps-antenna on the plough is not specified. EP 1338186 A2 discloses an arrangement to assess and control the working width of a plough, including a gps-antenna to assess the instantaneous position of a point on said plough with reference to a virtual reference line. According to figure 1 in EP 1338186 A2 the gps-antenna is mounted on the plough frame. DE - 100 39 600 discloses a plough with pivotably mounted plough members to adjust the working width of said plough. Said document also mentions generally the possibility to make use of a GPS to adjust said working width. EP-1444879 discloses futher a soil working machine with a GPS antenna mounted vertically above the soil working tools. The object of the present invention is to provide an arrangement to control the ploughing width with an improved degree of accuracy by introducing a mechanical feed back being part of the working width control mechanism. Some general aspects of the dynamics of ploughing, with particular reference to working width, are briefly described by reference to a schematical illustration of a plough in Fig. 1.

Fig. 1 shows schematically a plane view from above of a well known plough 1 with means to adjust the working width. Plough headstock 2 is mounted to the back of a tractor 5 by means of two towing linkages 3 and 3' and a top linkage 5. Both ends of towing linkages 3 and 3' and top linkage 5 are provided with ball-and-socket joints. Seen from above, this mounting means allows the plough to swing sideways to some extend.

Plough frame 8 is connected to plough headstock 2 by means of sliding 7. The angle between plough headstock 2 and plough frame 8 depends on the length of bracket 9. Bracket 9 may be in the form of a spindle or a hydraulic cylinder. A front plough member 10 and a rear plough member 11 are pivotably mounted on plough frame 8 by means of brackets 12 and 12'. Brackets 12 and 12' are interconnected by steering linkage 13. The angle between the brackets 12, 12' and plough frame 8 can be adjusted by means of plough width cylinder 14. One end of plough width cylinder 14 is connected to the steering linkage 13 and the other end to plough frame 8 or plough headstock 2 or to both depending on the type of plough. Plough members 10 and 11 usually comprise among others a plough beam 15, 15', a plough body 16, 16', a landside 17, 17', a plough share 18, 18' and a mouldboard 19, 19'. Plough 1 is further provided with a gps-antenna 20. Fig. 1 shows a conventional, one way plough. The invention also applies to two way reversible and swing ploughs.

The nominal working width is calculated by multiplying the number of plough members 10, 11 by the distance ℓ₁ between adjacent plough members. The distance ℓ₁ can be adjusted by means of the plough width cylinder 14. The length of plough width cylinder 14 is positively correlated with the working width. The actual working width may however differ from the nominal working width as is explained hereafter.

During ploughing, the soil force acting on a plough member 10, 11 is partly transferred by the landside 17 on the side of the plough furrow. The size of the landside is such that it moves exactly or near parallel to the direction of driving R along the furrow side when the plough is properly adjusted. The adjustment of the working width of the first plough member 10 is based on this characteristic. The working width of the first plough member 10 should equal ℓ₁. Plough frame 8 with sliding 7 can slide along plough headstock 2 by means of a spindle or a hydraulic cylinder (not shown).

There are two important reasons for the plough operator to adjust the working width of a plough:
- To end parallel to the field borderline;
- To straighten a bended furrow.

The working width needs to be adjusted when the field borderline runs parallel to the plough furrow, but the distance between the borderline and the furrow does not equal a multiple of the actual working width. Adjustment of the working width during ploughing is required to make the borderline and the furrow run parallel.

The imprint of the landside 17, 17" in the furrow side may vary depending on the soil force acting on the front part of a plough member 10, 11 and the resistance to failure of the soil along the furrow side. Variation may occur when soil changes from coarse textured into a finer texture during ploughing on a given field. It is common practise that the working width increases when the soil changes from a coarse into a finer texture. If so, the plough in Fig. 1 swings to the left, unploughed side. The increase of the working width is almost completely the result of the increasing working width of the first plough member 10. The following plough members add relatively very little to this.

The uncontrolled variation of the working width of a plough is very inconvenient for various reasons, e.g. when finishing up a field. Swinging of the plough also affects the position of the virtual towing point at the intersection of the produced parts of the towing linkages 3 and 3'. Variation of the position of the towing point may adversely affect the course stability of the tractor-plough combination.

The tractor operator has three options to adjust the working width when ploughing wider when the soil changes from a coarse into a finer texture:
a. Moving the sliding 7 in the direction of the unploughed by means of a spindle or a hydraulic cylinder.
b. Decrease the angle between the plough headstock 2 and the plough frame 8.
c. Decrease the working width by shortening the working width cylinder 14.

From a theoretical point of view, option b. is to be preferred as it only changes the working width of the first plough member 10 and it brings back the towing point in the original, preferred position. The very sensitive response of the working width to changing the angle between the plough headstock 12 and the plough frame 8 is a serious drawback of option b. Option a. compensates for the increase of the working width of plough member 10 only. Changing the position of sliding 7 has no significant effect on the position of the towing point.

From a theoretical point of view, option c. is the less favourable. Option c. compensates for the increase of the working width of the first plough member 10 by decreasing the working width of all plough members equally. The working width of the first plough member 10 remains greater than the working width of the other members. Option c. does not bring the towing point back in the original position.

From a technical point of view it is possible to design a gps-controlled plough with arrangements to assess and control the working width of the first plough member and arrangements to assess and control the working width of the plough. Under practical conditions however it suffices to control the working width of the plough, provided that the accuracy of the gps-control mechanism meets the demands.

When applying gps to control the working width of a plough it is assumed that the field to be ploughed is provided with a virtual pattern of lines L to be followed by a defined point on the plough. The coordinates of the points defining the lines L are for instance designed by geo-processing of a digital map of the field to be ploughed. The distance between the lines equals the desired working width. These virtual ploughing lines may run parallel, may diverge or converge or may be straight or bending.

The gps-antenna 20 is mounted on a plough so as to avoid interference by any plough or tractor part when receiving the satellite signal(s). Furthermore, the plough or tractor is equipped with a micro-processor comparing the actual "ist"-position with the desired "soll"-position. If needed, the micro processor sends a command to the plough to alter its working width.

Of particular relevance is the position where the gps-antenna 20 is mounted on a plough. According to the invention, the gps-antenna 20 is mounted on one of the plough members 10,11. In a preferred embodiment, the gps-antenna 20 is mounted on the bracket 12 of the rear plough member 11. This plough member acts most sensitive to adjustment of the working width of the plough and swinging of the plough with respect to the tractor. Of particular relevance is further the position of the gps-antenna 20 with reference to the pivot joint of the bracket 12, 12' of the plough members 10,11. According to a preferred embodiment of the invention, the gps-antenna 20 is positioned in a geometrical plane that, seen from above and in the driving direction, is bound at the rear by a line running at right angles to the direction of driving R and intersecting the pivot joint of the plough member where it is mounted on. This particular position of the gps-antenna 20 with respect of the plough generates a mechanical feed back in the control mechanism of the working width of the plough.

The effectiveness of the arrangement according to the invention will now be elucidated by reference to the embodiment illustrated schematically in Fig. 1.

The instantaneous working width of a plough is correct when the centre of the gps-antenna 20 follows the virtual plough line L . Assume now, that the gps-antenna 20 starts to deviate from the plough line L in the direction of the unploughed part of the field. When the deviation exceeds a predefined threshold value, the micro processor commands the hydraulic system to retract the hydraulic cylinder 14 that operates the steering linkage. As a result, the brackets 12, 12' including the plough members 10, 11 and the gps-antenna 20 rotate clockwise with reference to the plough frame 8 in Fig. 1. As a result of this rotation, the plough members 10, 11 move sideways with respect of the direction of driving R, in the direction of plough line L. This sideway movement stops as soon as the plough members 10, 11 retain the directional position, with reference to the direction of driving R, as before the adjustment. A new state of equilibrium has come into being. During the rotation of the plough members 10,11 with respect to the plough frame 8, the gps-antenna 20 also rotates around the pivot joint in the direction of the virtual plough line L. As soon as the gps-antenna 20 intersects the dead band of the plough line L, the micro processor stops activating the hydraulic system. At that very moment, the plough is at or near its new state of equilibrium. This mechanical feed back forming a part of the plough width control mechanism effectively reduces oversteering and swinging of the plough to an acceptable level.

## Claims

1. Plough (1) with pivotably mounted plough members (10, 11) on a frame (8) to adjust the working width of said plough and a gps-antenna (20) mounted on said plough to assess the instantaneous position of a point on said plough with reference to a virtual plough line L, and to control the working width of the plough, whereby the gps-antenna (20) is mounted on a plough member (10, 11) which is pivotably mounted on said frame (8) of said plough (1).

2. Plough with gps-antenna (20) according to claim 1, **characterised in that** the gps-antenna (20) is positioned in a geometrical plane that, seen from above and in the driving direction R, is bound at the rear by a line running at right angles to the driving direction R and intersecting the pivot joint of the plough member it is mounted on.

3. Plough with GPS antenna (20) according to claim 1, **characterised in that** the gps-antenna (20) is mounted on the last plough member (11), said plough member is mounted on the back of the plough frame (8).

## Patentansprüche

1. Pflug (1) mit Pflugkörpern (10, 11), die zur Einstellung der Arbeitsbreite des Pflugs auf einem Rahmen (8) drehbar montiert sind und mit einer GPS-Antenne, die zur Abschätzung der momentanen Stellung eines Punktes des Pfluges bezüglich einer virtuellen Gerade L und zur Einstellung der Arbeitsbreite des Pfluges auf dem Pflug montiert ist, ***dadurch gekennzeichnet,* dass** die GPS-Antenne (20) auf einem Pflugkörper (10, 11), der drehbar auf dem Rahmen (8) des Pflugs (1) montiert ist, angebracht ist.

2. Pflug mit einer GPS-Antenne (20) nach Anspruch 1, ***dadurch gekennzeichnet,* dass** die GPS-Antenne (20) sich in einer geometrischen Ebene erstreckt die, von oben und in der Fahrtrichtung R gesehen, am hinteren Teil durch eine Gerade, die sich senkrecht zur Fahrtrichtung R erstreckt und das Kugelgelenk des Pflugkörpers auf dem sie angebracht ist durchquert, begrenzt ist.

3. Pflug mit einer GPS-Antenne (20) nach Anspruch 1, ***dadurch gekennzeichnet,* dass** die GPS-Antenne (20) auf dem letzten Pflugkörper (11) angebracht ist, wobei der Pflugkörper am hinteren Teil des Pflugrahmens (8) montiert ist.

## Revendications

1. Charrue (1) équipée de corps de labour (10, 11) montés de manière pivotante sur un bâti (8) en vue de régler la largeur de travail de ladite charrue et une antenne GPS (20) montée sur ladite charrue en vue d'évaluer la position instantanée d'un point de ladite charrue par rapport à une droite L virtuelle de labour et de régler la largeur de travail de la charrue, ***caractérisée par le fait* que** l'antenne GPS (20) est montée sur un corps de labour (10, 11) qui est monté de manière pivotante sur ledit bâti (8) de ladite charrue (1).

2. Charrue avec une antenne GPS (20) selon la revendication 1, ***caractérisée par le fait* que** l'antenne GPS (20) est située dans un plan géométrique qui, vue de dessus et dans la direction d'avance R, est limité à l'arrière par une droite s'étendant perpendiculairement à la direction d'avance R et passant par l'articulation sphérique du corps de labour sur laquelle elle est montée.

3. Charrue avec une antenne GPS (20) selon la revendication 1, ***caractérisée par le fait* que** l'antenne GPS (20) est montée sur le dernier corps de labour (11), ledit corps de labour est monté à l'arrière du bâti (8) de la charrue.
